# EUROPEAN PATENT SPECIFICATION

(11) **EP 3 093 786 B1**
(45) Date of publication and mention of the grant of the patent: **21.06.2017**
(21) Application number: 15167489.2
(22) Date of filing: 13.05.2015
(51) Int. Cl.: G06F 21/44, H04L 29/06

(54) **AUTOMATIC LOGIN ON A WEBSITE BY MEANS OF AN APP**
AUTOMATISCHES EINLOGGEN AUF EINER WEBSITE MITTELS EINER APP
OUVERTURE DE SESSION AUTOMATIQUE SUR UN SITE WEB AU MOYEN D'UN APP

(43) Date of publication of application: 16.11.2016
(73) Proprietor: Spotify AB, 113 56 Stockholm (SE)
(72) Inventor: Afzelius, Jens, 123 55 FARSTA (SE)
(74) Representative: Kransell & Wennborg KB

(56) References cited:
- WO-A1-2015/010558
- US-A1- 2009 249 078
- US-A1- 2013 086 670
- US-A1- 2014 157 377
- E. Hammer-Lahav: "The OAuth 1.0 Protocol - RFC5849", International, 30 April 2010 (2010-04-30), pages 1-38, XP055075817, Internet Retrieved from the Internet: URL:http://tools.ietf.org/pdf/draft-hardt- oauth-01.pdf [retrieved on 2013-08-20]

## Description

### TECHNICAL FIELD

The present disclosure relates to methods and devices for facilitating login on a website.

### BACKGROUND

A service provider, e.g. providing a media streaming service, may provide the service via either or both of a web application on a web site of the service provider and a service application (app/client) installed on a user device such as a smartphone. A user may be logged into the service via the web site and/or the via the app. The user may even be logged in via the web site from the same smartphone which has the app installed thereon, by means of a web browser installed on the smartphone. The user may e.g. be continuously logged in via the app (since there may be no reason to log out from the service since the smartphone is only used by the user) while only occasionally logging in via the web site (for instance for performing payments or the like which is not supported via the app). The user than has to remember his/her user name and password, and log in also via the web site. Documents WO 2015/010558, US 2009/249078, US 2013/086670 and US 2014/157377 disclose methods of controlling access to a server by a mobile terminal.based on OAuth Web Resource Authorization Profiles as introduced in IETF document "The OAuth 1.0 Protocol - RFC5849".

### SUMMARY

It is an objective of the present invention to facilitate login on a website by a radio device by taking advantage of the fact that the user is already logged into a service application running on the radio device. The website may be part of the corresponding web application of the service of the service application whereby login to the service via the web site is facilitated by the user already being logged in to the service via the app.

According to an aspect of the present invention, there is provided a method performed in a radio device for facilitating login on a website. The method comprises, by means of a web browser in the radio device, downloading a web page of the website from a web server hosting the website. The method also comprises receiving a login request from the web server, the login request comprising a request for login information for a service from a service application of the service in the radio device. The method also comprises, in response to the received login request and by means of the service application, automatically sending a login token request to a server of a service provider providing the service. The method also comprises, from the server of the service provider, receiving a login token response comprising a login token. The method also comprises, to the web server, sending a login information message comprising the login token.

According to another aspect of the present invention, there is provided a computer program product comprising computer-executable components for causing a radio device to perform an embodiment of the method performed in the radio device, when the computer-executable components are run on processor circuitry comprised in the radio device.

According to another aspect of the present invention, there is provided a radio device comprising processor circuitry, and a storage unit storing instructions executable by said processor circuitry whereby said radio device is operative to, by means of a web browser in the radio device, download a web page of the website from a web server hosting the website. The radio device is also operative to receive a login request from the web server, the login request comprising a request for login information for a service from a service application of the service in the radio device. The radio device is also operative to, in response to the received login request and by means of the service application, automatically send a login token request to a server of a service provider providing the service. The radio device is also operative to, from the server of the service provider, receive a login token response comprising a login token. The radio device is also operative to, to the web server, send a login information message comprising the login token.

According to another aspect of the present invention, there is provided a method performed by a web server for facilitating login on a website hosted on the web server. The method comprises uploading a web page of the website to a web browser of a radio device. The method also comprises sending a login request to a service application in the radio device, the login request comprising a request for login information for a service of the service application. The method also comprises, from the radio device, receiving a login information message comprising a login token. The method also comprises automatically logging in on the website by means of the received login token.

According to another aspect of the present invention, there is provided a computer program product comprising computer-executable components for causing a web server to perform an embodiment of the method performed in the web server, when the computer-executable components are run on processor circuitry comprised in the web server.

According to another aspect of the present invention, there is provided a web server comprising processor circuitry, and a storage unit storing instructions executable by said processor circuitry whereby said web server is operative to upload a web page of the website to a web browser of a radio device. The web server is also operative to send a login request to a service application in the radio device, the login request comprising a request for login information for a service of the service application. The web server is also operative to, from the radio device, receive a login information message comprising a login token. The web server is also operative to automatically log in on the website by means of the received login token.

It is an advantage that a user of a radio device, e.g. a smartphone or a tablet computer, who is logged into a service application (i.e. an app) running on the radio device can be automatically logged in to a web site (typically on the Internet), e.g. the corresponding web application of the same service as the service application. The user may thus be logged in without having to remember and manually enter a password. The user may continuously be logged in to the service via the app, but may have to log in to the corresponding web site of the service in order to perform an action which is not available via the app (e.g. make a purchase). Since the user is already logged in to the service (via the app) the user may be allowed to log in automatically via the web site as well by means of the present invention.

Alternatively, automatic log in may be available for web sites other than the web site of the provider the service of the app, e.g. if there is an agreement for such an arrangement between the service provider and the owner of the other web site where automatic log in is allowed to the web site if the user is already logged in via the service application.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of an embodiment of a communication system in accordance with the present invention.
Fig 2a is a schematic block diagram of an embodiment of a radio device in accordance with the present invention.
Fig 2b is a schematic block diagram of an embodiment of a web server in accordance with the present invention.
Fig 3 is a schematic illustration of an embodiment of a computer program product in accordance with the present invention.
Fig 4 is a schematic flow chart of embodiments of a method performed in a radio device, in accordance with the present invention.
Fig 5 is a schematic flow chart of embodiments of a method performed in a web server, in accordance with the present invention.
Fig 6 is a schematic signalling diagram illustrating embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

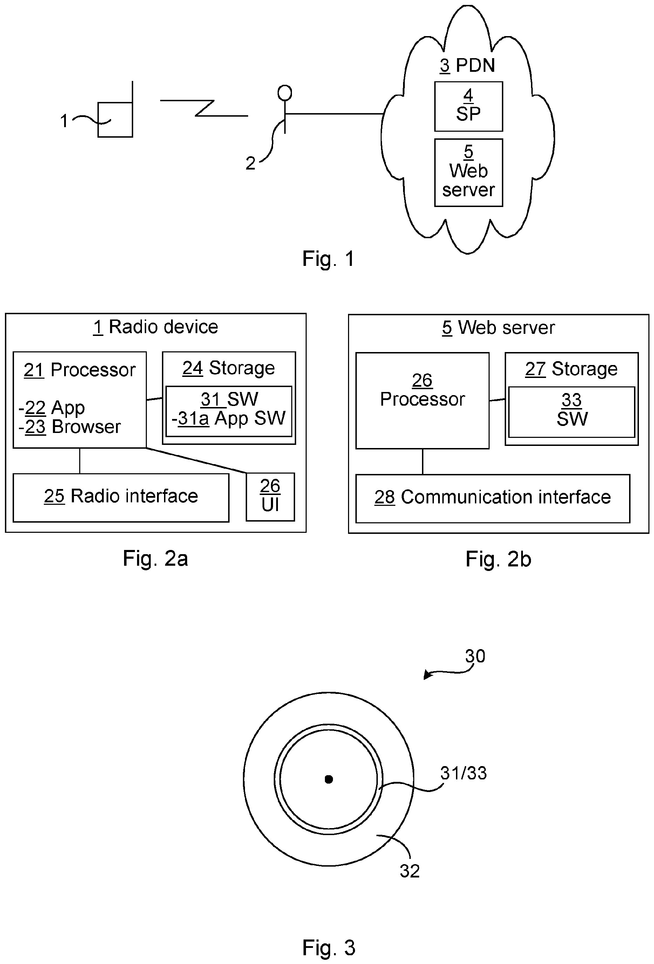

Figure 1 illustrates a communication system in which embodiments of the present invention may be used. A radio device 1 is connected to a service provider 4 via a base station 2 and a Packet Data Network 3, e.g. the Internet.

The radio device 1 may be any device or user equipment (UE), mobile or stationary, enabled to communicate over a radio channel in a communication network, for instance but not limited to e.g. mobile phone, smartphone, modem, sensors, meters, vehicles (e.g. a car), household appliances, medical appliances, media players, cameras, or any type of consumer electronic, for instance but not limited to television, radio, lighting arrangements, tablet computer, laptop, or personal computer (PC). In accordance with the present invention, the radio device is running a service application (app) for accessing a service, e.g. media streaming, possibly instead of accessing the service via a corresponding web application (Internet web site). In view of this situation, the radio device is typically a smartphone or a tablet computer, preferably a smartphone.

The base station 2 may be any radio base station via which the radio device 1 may connect to the PDN 3, e.g. an Access Point (AP) of a Wireless Local Area Network (WLAN) or a node of a cellular Radio Access Network (RAN) of a Third Generation Partnership Project (3GPP) communication standard, e.g. a Node B of a Wideband Code Division Multiple Access (WCDMA) standard or an evolved Node B (eNB) of a Long Term Evolution (LTE) standard.

The PDN 3 may typically be the Internet, but may alternatively be any other PDN, such as an operator network of a telecommunications operator.

The service provider (SP) 4 is configured for providing a service to the radio device 1 (e.g. for the benefit of the human user of the radio device). The service may be any service, such as a media streaming service for streaming e.g. music and/or video. In accordance with the present invention, the radio device may access the service from the SP 4 via an app installed in the radio device 1.

The radio device 1 may also connect to a web server 5 via the same or a different PDN 3, e.g., the Internet, by means of a web browser installed in the radio device. As discussed herein, the web server 5 may be a server of the SP 4 or the web server 5 may not belong to the SP 4 but may, e.g., be a web server of a service provider of another service.

Figure 2a schematically illustrates an embodiment of a radio device 1 of the present disclosure. The radio device 1 comprises processor circuitry 21 e.g. a central processing unit (CPU). The processor circuitry 21 may comprise one or a plurality of processing units in the form of microprocessor(s). However, other suitable devices with computing capabilities could be comprised in the processor circuitry 21, e.g. an application specific integrated circuit (ASIC), a field programmable gate array (FPGA) or a complex programmable logic device (CPLD). The processor circuitry 21 is configured to run one or several computer program(s) or software (SW) 31 (see also figure 3) stored in a storage 24 of one or several storage unit(s) e.g. a memory. The processor circuitry may e.g. execute application SW 31a in the storage 24 to form the service application 22. Similarly, the web browser 23 may be formed by executing dedicated SW stored in the storage 24. The storage unit is regarded as a computer readable means 32 (see figure 3) as discussed herein and may e.g. be in the form of a Random Access Memory (RAM), a Flash memory or other solid state memory, or a hard disk, or be a combination thereof. The processor circuitry 21 may also be configured to store data in the storage 24, as needed. The radio device 1 also comprises a radio interface 25 for communicating via the radio base station 2 over an air interface. The radio interface comprises a transmitter, a receiver and an antenna, which may be combined to form a transceiver or be present as distinct units within the radio device 1. Further, the radio device 1 comprises a user interface (UI) 26, e.g. comprising a touchscreen and/or buttons/keys, allowing the user of the radio device to input commands to the radio device.

Figure 2b schematically illustrates an embodiment of a web server 5 of the present disclosure. The web server 5 comprises processor circuitry 26 e.g. a central processing unit (CPU). The processor circuitry 26 may comprise one or a plurality of processing units in the form of microprocessor(s). However, other suitable devices with computing capabilities could be comprised in the processor circuitry 26, e.g. an application specific integrated circuit (ASIC), a field programmable gate array (FPGA) or a complex programmable logic device (CPLD). The processor circuitry 26 is configured to run one or several computer program(s) or software (SW) 33 (see also figure 3) stored in a storage 27 of one or several storage unit(s) e.g. a memory. The storage unit is regarded as a computer readable means 32 (see figure 3) as discussed herein and may e.g. be in the form of a Random Access Memory (RAM), a Flash memory or other solid state memory, or a hard disk, or be a combination thereof. The processor circuitry 26 may also be configured to store data in the storage 27, as needed. The web server 5 also comprises a communication interface 28 for communicating via the PDN 3 and the radio base station 2.

Figure 3 illustrates a computer program product 30. The computer program product 30 comprises a computer readable (e.g. non-volatile) medium 32 comprising a computer program 31/33 in the form of computer-executable components. The computer program/computer-executable components 31/33 may be configured to cause a device, e.g. a radio device 1 or a web server 5 as discussed herein, to perform an embodiment of a method of the present disclosure. The computer program/computer-executable components may be run on the processor circuitry 21/26 of the device1/5 for causing the device to perform the method. The computer program product 70 may e.g. be comprised in a storage unit or memory 24/27 comprised in the device 1/5 and associated with the processor circuitry 21/26. Alternatively, the computer program product 30 may be, or be part of, a separate, e.g. mobile, storage means, such as a computer readable disc, e.g. CD or DVD or hard disc/drive, or a solid state storage medium, e.g. a RAM or Flash memory.

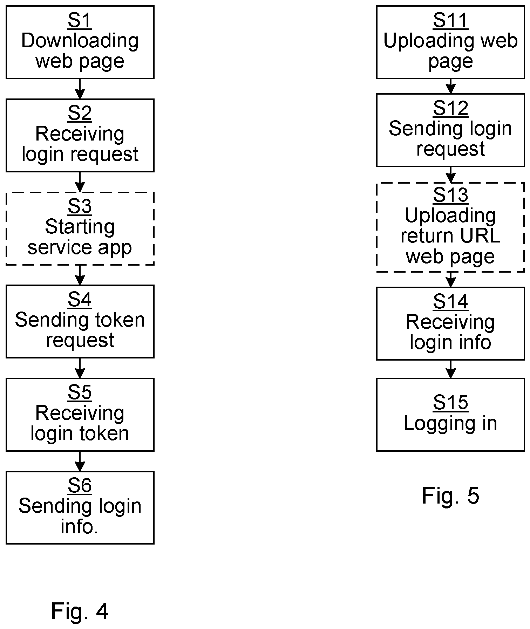

Figure 4 is a schematic flow chart of embodiments of a method performed in a radio device 1, in accordance with the present invention. The method is for facilitating login on a website hosted on a web server 5.

By means of the web browser 23 in the radio device, a web page of the website is downloaded S1 from the web server 5 hosting the website. The web page may be a login web page for logging in to the website, or the web page may comprise a clickable option which requires the user to login to the website. Thus the user may click on a button, e.g., for making a purchase (which requires the user to be logged in to be executed). In some embodiments of the present invention, the login request is triggered by a user of the radio device 1 inputting a command to the downloaded S1 web page via the user interface 26 of the radio device.

A login request is received from the web server 5, the login request comprises a request for login information for a service from the service application 22 of the service, the service application running in the radio device. The login request, which may have been triggered by an action of the user on the web page or by simply entering (downloading) the web page is sent from the web server 5 to the app 22. Typically, the user is already logged in to the service via the app 22, allowing the user to be automatically logged in to the web site on the web server 5.

In response to the received S2 login request and by means of the service application 22, the radio device 1 automatically sends S4 a login token request to a server of a service provider 4 providing the service. Optionally, if the app 22 is not currently running on the radio device 1, the radio device in response to the received S2 login request and before automatically sending S4 the login token request, starts S3 the service application 22 by running application software 31a stored in the radio device. As previously mentioned, the web server 5 may or may not be a server of the SP 4, why the radio device may in some embodiments send S4 the login token request to the web server 5. However, login information is typically held in a separate server of the SP 4.

Then, from the server of the service provider 4, the radio device 1 (typically the app 22 in the radio device) receives S5 a login token response comprising a login token. The token may be in accordance with the OAuth authorization standard.

Then the radio device sends S6, to the web server 5, a login information message comprising the login token. The login token allows the web server 5 to automatically log in the user to the website.

Figure 5 is a schematic flow chart of embodiments of a method performed in a web server 5, in accordance with the present invention. The method is for facilitating login on a website hosted on the web server and may be the corresponding web server method to the radio device method discussed in relation to figure 4. The discussion in relation to figure 4 is thus in applicable parts also relevant to the method of figure 5.

The web server uploads S11 a web page of the website to a web browser 23 of the radio device 1. Then, the web server sends S12 the login request to the service application 22 in the radio device. The login request comprises a request for login information for a service of the service application. The login information is information allowing the web server to log in the user of the radio device 1 to log on to the service via the website. In response, the web server 5 receives S14, from the radio device 1, the login information message comprising the login token. Optionally, the web server 5 may, before the receiving S14 of the login information message, upload S13 the web page of a Return URL to the web browser 23. The login information message may comprise the Return URL of a web page on the website, and wherein the login token may be for logging in on the web page of the Return URL. Then, the web server automatically logs in S15 on the website by means of the received S14 login token. Thus, the user of the radio device has automatically been logged in on the website, via the browser 23, by being already logged in to the service via the app 22.

In some embodiments of the present invention, the login request comprises a private key, corresponding to a public key held by the service application 22, i.e. the login request to the app 22 is signed with the private key. The data of the login request may be hashed, and the hash may be encrypted with the private key, whereby the encrypted hash is the signature with which the login request is signed. Thus, the app 22 can verify that the login request has been sent by a an element which knows the private key, allowing the service application to verify that the web server 5 is authorized to receive the login information which it asks for with the login request.

In some embodiments of the present invention, the login request comprises a Return URL, informing the radio device on which web page the login information should be used. The login request may be in accordance with a Custom URL Scheme, e.g., of Android or iOS.

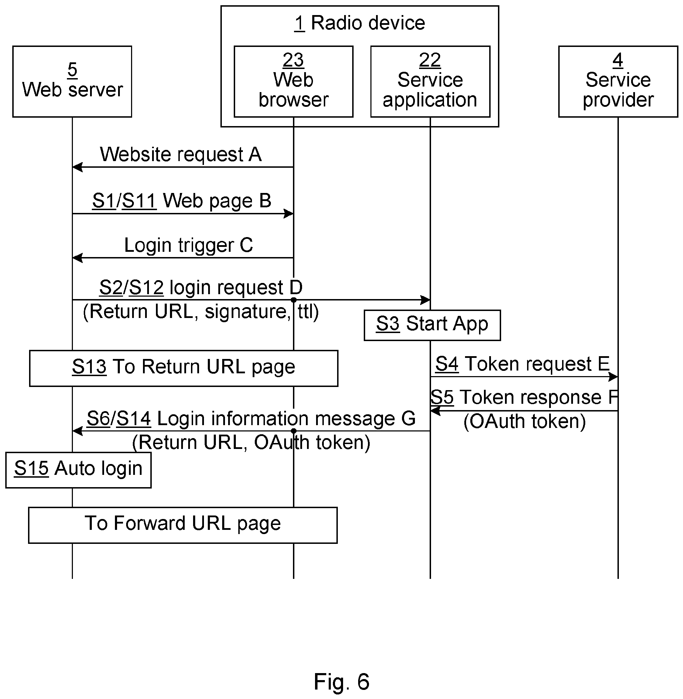

Figure 6 is a schematic signalling diagram illustrating embodiments of the present invention. I should again be noted that the web server 5 may or may not be a server of the service provider 4. For clarity, the web server 5 has been positioned separate from the service provider 4 in figure 6.

The web browser 23, typically on instructions from the user of the radio device 1, requests to enter a website (or a specific page of the website) by sending a website request A to the web server 5 hosting the website. In response, the webserver uploads S1/S11 web page B to the web browser. Optionally, the web browser 23 sends a login trigger C to the web server 5 (e.g. as a result of input from the user via the UI 26 as discussed herein). In response to the login trigger C, or to the uploading of the webpage B, the web server 5 sends S2/S12 a login request D to the app 22 via the browser 23. The login request D may comprise a signature of a private key (to verify that the web server is authorised to request the login), a ttl (for specifying how long the request is valid) and/or a Return URL which is the URL of the webpage on which the login should be executed.

The login request D prompts the radio device 1 to start S3 the app 22 (if it is not already running). In reaction to the received login request D, the app 22 sends S4 a token request E to the SP 4, requesting a login token from the SP 4 for logging in the user of the radio device 1 to the website hosted by the web server 5 (e.g. a website of the SP 4). In response, the SP 4 sends a token response F comprising the login token, e.g. an OAuth token. In the meantime, the web browser 23 may download S13 the webpage of the Return URL (in this way, the user will access the Return URL page even if automatic login fails, e.g. because the user is not logged in via the app 22 or if the user does not have the app installed on the radio device).

The app 22 sends S6/S14, via the browser 23, a login information message G to the web server 5. The login information message G comprises the login token, e.g. in the fragment part of the Return URL (#OAuthtoken). By means of the received login token, the web server 5 can then automatically login S15 the user to the website. Optionally, the login webpage (e.g. the Return URL page) may comprise a Forward URL, prompting the web browser 23 to download the webpage of the Forward URL upon the automatic login S15.

Thus, a user can be automatically logged in to a website by means of already being logged in to a service via an app, without having to actively log in or otherwise approve login on the website.

Below follow some other aspects of the present invention.

According to an aspect of the present invention, there is provided a computer program 31 comprising computer program code which is able to: when run on processor circuitry 21 of a radio device 1, cause the radio device to, by means of a web browser 23 in the radio device, download S1 a web page B of the website from a web server 5 hosting the website; receive S2 a login request D from the web server 5, the login request comprising a request for login information for a service from a service application 22 of the service in the radio device; in response to the received S2 login request D and by means of the service application 22, automatically send S4 a login token request E to a server of a service provider 4 providing the service; from the server of the service provider 4, receive S5 a login token response F comprising a login token; and, to the web server 5, send S6 a login information message G comprising the login token.

According to another aspect of the present invention, there is provided a computer program 33 comprising computer program code which is able to, when run on processor circuitry 26 of a web server 5, cause the web server to: upload S11 a web page B of the website to a web browser 23 of a radio device 1; send S12 a login request D to a service application 22 in the radio device, the login request comprising a request for login information for a service of the service application; from the radio device 1, receive S14 a login information message G comprising a login token; and automatically log in S15 on the website by means of the received S14 login token.

According to another aspect of the present invention, there is provided a computer program product 30 comprising a computer program 31 or 33 and a computer readable means 32 on which the computer program is stored.

According to another aspect of the present invention, there is provided a radio device 1 comprising: means for, by means of a web browser 23 in the radio device, downloading S1 a web page B of the website from a web server 5 hosting the website; means for receiving S2 a login request D from the web server 5, the login request comprising a request for login information for a service from a service application 22 of the service in the radio device; means for, in response to the received S2 login request D and by means of the service application 22, automatically sending S4 a login token request E to a server of a service provider 4 providing the service; means for, from the server of the service provider 4, receiving S5 a login token response F comprising a login token; and means for, to the web server 5, sending S6 a login information message G comprising the login token.

According to another aspect of the present invention, there is provided a web server 5 comprising: means for uploading S11 a web page B of a website to a web browser 23 of a radio device 1; means for sending S12 a login request D to a service application 22 in the radio device, the login request comprising a request for login information for a service of the service application; means for, from the radio device 1, receiving S14 a login information message G comprising a login token; and means for automatically logging in S15 on the website by means of the received S14 login token.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method performed in a radio device (1) for facilitating login on a website, the method comprising:
by means of a web browser (23) in the radio device, downloading (S1) a web page (B) of the website from a web server (5) hosting the website;
receiving (S2), at an app (22) of a service provider (4), a login request (D) from the web server (5), the login request comprising a request for login information for the website;
in response to the received (S2) login request (D) and by means of the app (22), automatically sending (S4) a login token request (E) to a server of the service provider (4);
from the server of the service provider (4), receiving (S5) at the app (22) a login token response (F) comprising a login token; and
to the web server (5), the app (22) sending (S6) a login information message (G) comprising the login token.

2. The method of claim 1, wherein the login request (D) comprises a private key, corresponding to a public key of the app (22), allowing the app to verify that the web server (5) is authorized to receive the login information.

3. The method of claim 1 or 2, wherein the receiving (S2) of the login request is triggered by a user of the radio device (1) inputting a command to the downloaded (S1) web page via a user interface (26) of the radio device.

4. The method of any preceding claim, further comprising:
in response to the received (S2) login request and before automatically sending (S4) the login token request, starting (S3) the app (22) by running application software (31) stored in the radio device.

5. The method of any preceding claim, wherein the login request (D) comprises a Return URL, informing the radio device on which web page the login information should be used.

6. The method of any preceding claim, wherein the login request is a Custom URL Scheme message.

7. The method of any preceding claim, wherein the login token is an OAuth token.

8. A computer program product (30) comprising computer-executable components (31) for causing a radio device (1) to perform the method of any one of claims 1-7 when the computer-executable components are run on processor circuitry (21) comprised in the radio device.

9. A radio device (1) comprising:
processor circuitry (21); and
a storage unit (22) storing instructions (31) executable by said processor circuitry whereby said radio device is operative to:
by means of a web browser (23) in the radio device, download a web page (B) of the website from a web server (5) hosting the website;
receive, at an app (22) of a service provider (4), a login request (D) from the web server (5), the login request comprising a request for login information for the website;
in response to the received login request (D) and by means of the app (22), automatically send a login token request (E) to a service provider (4); from the service provider (4), receive at the app (22) a login token response (F) comprising a login token; and to the web server (5), from the app (22), send a login information message (G) comprising the login token.

10. A method performed by a web server (5) for facilitating login on a website hosted on the web server, the method comprising:
uploading (S11) a web page (B) of the website to a web browser (23) of a radio device (1);
sending (S12) a login request (D) to an app (22) in the radio device, the login request comprising a request for login information for a the website;
from the radio device (1), receiving (S14) a login information message (G) comprising a login token; and
automatically logging in (S15) on the website by means of the received (S14) login token.

11. The method of claim 10, wherein the login request (D) comprises a private key, corresponding to a public key of the app (22), allowing the service application to verify that the web server (5) is authorized to receive the login information.

12. The method of claim 10 or 11, wherein the login information message (G) comprises a Return URL of a web page on the website, and wherein the logging in (S15) is on the web page of the Return URL.

13. The method of claim 12, further comprising:
before the receiving (S14) of the login information message, uploading (S13) the web page of the Return URL to the web browser (23).

14. A computer program product (30) comprising computer-executable components (33) for causing a web server (5) to perform the method of any one of claims 10-13 when the computer-executable components are run on processor circuitry (26) comprised in the web server.

15. A web server (5) comprising:
processor circuitry (26); and
a storage unit (27) storing instructions (33) executable by said processor circuitry whereby said web server is operative to:
upload a web page (B) of the website to a web browser (23) of a radio device (1);
send a login request (D) to an app (22) in the radio device, the login request comprising a request for login information for the website;
from the radio device (1), receive a login information message (G) comprising a login token; and
automatically logging in on the website by means of the received login token.

## Patentansprüche

1. Verfahren, das in einer Funkvorrichtung (1) zur Ermöglichung eines Einloggens auf einer Website durchgeführt wird, wobei das Verfahren Folgendes umfasst:
Herunterladen (S1) einer Webseite (B) der Website von einem Webserver (5), der die Website verwaltet, mittels eines Webbrowsers (23) in der Funkvorrichtung;
Empfangen (S2) einer Einloganforderung (D) von dem Webserver (5) an einer App (22) eines Diensteanbieters (4), wobei die Einloganforderung eine Anforderung nach Einloginformationen für die Website enthält;
automatisches Senden (S4) einer Einlog-Token-Anforderung (E) zu einem Server des Diensteanbieters (4) in Reaktion auf die empfangene (S2) Einloganforderung (D) und mittels der App (22);
Empfangen (S5) einer Einlog-Token-Antwort (F), die einen Einlog-Token aufweist, von dem Server des Diensteanbieters (4) an der App (22); und
Senden (S6) einer Einloginformationennachricht (G), die den Einlog-Token enthält, mittels der App (22) zu dem Webserver (5).

2. Verfahren nach Anspruch 1, wobei die Einloganforderung (D) einen privaten Schlüssel aufweist, der einem öffentlichen Schlüssel der App (22) entspricht, so dass der App erlaubt ist, zu verifizieren, dass der Webserver (5) autorisiert ist, die Einloginformationen zu empfangen.

3. Verfahren nach Anspruch 1 oder 2, wobei das Empfangen (S2) der Einloganforderung durch einen Anwender der Funkvorrichtung (1) ausgelöst wird, der über eine Benutzerschnittstelle (26) der Funkvorrichtung einen Befehl zu der heruntergeladenen (S1) Webseite eingibt.

4. Verfahren nach einem vorhergehenden Anspruch, ferner aufweisend:
in Reaktion auf die empfangene (S2) Einloganforderung und vor einem automatischen Senden (S4) der Einlog-Token-Anforderung, Starten (S3) der App (22) durch Abarbeiten von Anwendungssoftware (31), die in der Funkvorrichtung gespeichert ist.

5. Verfahren nach einem vorhergehenden Anspruch, wobei die Einloganforderung (D) eine Return-URL enthält, die der Funkvorrichtung mitteilt, auf welcher Webseite die Einloginformationen verwendet werden sollten.

6. Verfahren nach einem beliebigen vorhergehenden Anspruch, wobei die Einloganforderung eine Custom-URL-Schema-Nachricht ist.

7. Verfahren nach einem vorhergehenden Anspruch, wobei das Einlog-Token ein OAuth-Token ist.

8. Computerprogrammprodukt (30), das von einem Computer ausführbare Komponenten (31) aufweist, die dazu dienen, eine Funkvorrichtung (1) zu veranlassen, das Verfahren nach einem beliebigen der Ansprüche 1 - 7 durchzuführen, wenn die von einem Computer ausführbaren Komponenten auf einer Prozessorschaltung (21) abgearbeitet werden, die in der Funkvorrichtung enthalten ist.

9. Funkvorrichtung (1), aufweisend:
eine Prozessorschaltung (21); und
eine Speichereinheit (22), die Befehle (31) speichert, die durch die Prozessorschaltung ausführbar sind, wobei die Funkvorrichtung dafür ausgelegt ist:
eine Webseite (B) der Website von einem Webserver (5), der die Website verwaltet, mittels eines Webbrowsers (23) in der Funkvorrichtung herunterzuladen;
eine Einloganforderung (D) von dem Webserver (5) an einer App (22) eines Diensteanbieters (4) zu empfangen, wobei die Einloganforderung eine Anforderung nach Einloginformationen für die Website enthält;
in Reaktion auf die empfangene Einloganforderung (D) und mittels der App (22) automatisch eine Einlog-Token-Anforderung (E) zu einem Diensteanbieter (4) zu senden;
an der App (22) von dem Diensteanbieter (4) eine Einlog-Token-Antwort (F) zu empfangen, die einen Einlog-Token enthält; und
von der App (22) eine Einloginformationennachricht (G), die den Einlog-Token aufweist, zu dem Webserver (5) zu senden.

10. Verfahren, das durch einen Webserver (5) zur Ermöglichung eines Einloggens auf einer Website durchgeführt wird, die auf dem Webserver verwaltet wird, wobei das Verfahren folgende Schritte umfasst:
Hochladen (S11) einer Webseite (B) der Website zu einem Webbrowser (23) einer Funkvorrichtung (1);
Senden (S12) einer Einloganforderung (D) zu einer App (22) in der Funkvorrichtung, wobei die Einloganforderung eine Anforderung nach Einloginformationen für die Website aufweist;
Empfangen (S14) einer Einloginformationennachricht (G), die einen Einlog-Token aufweist, von der Funkvorrichtung (1); und
automatisches Einloggen (S15) auf der Website mittels des empfangenen (S14) Einlog-Tokens.

11. Verfahren nach Anspruch 10, wobei die Einloganforderung (D) einen privaten Schlüssel aufweist, der einem öffentlichen Schlüssel der App (22) entspricht, so dass der Dienstanwendung erlaubt ist, zu verifizieren, dass der Webserver (5) autorisiert ist, die Einloginformationen zu empfangen.

12. Verfahren nach Anspruch 10 oder 11, wobei die Einloginformationennachricht (G) eine Return-URL einer Webseite auf der Website enthält, und wobei das Einloggen (S15) auf der Webseite der Return-URL stattfindet.

13. Verfahren nach Anspruch 12, ferner aufweisend:
vor dem Empfangen (S14) der Einloginformationennachricht, Hochladen (S13) der Webseite der Return-URL zu dem Webbrowser (23).

14. Computerprogrammprodukt (30), das von einem Computer ausführbare Komponenten (33) aufweist, die dazu dienen, einen Webserver (5) zu veranlassen, das Verfahren nach einem beliebigen der Ansprüche 10 - 13 durchzuführen, wenn die von einem Computer ausführbaren Komponenten auf einer Prozessorschaltung (26) abgearbeitet werden, die in dem Webserver enthalten ist.

15. Webserver (5), aufweisend:
eine Prozessorschaltung (26); und
eine Speichereinheit (27), die Befehle (33) speichert, die durch die Prozessorschaltung ausführbar sind, wobei der Webserver dafür ausgelegt ist:
eine Webseite (B) der Website zu einem Webbrowser (23) einer Funkvorrichtung (1) hochzuladen;
eine Einloganforderung (D) zu einer App (22) in der Funkvorrichtung zu senden, wobei die Einloganforderung eine Anforderung nach Einloginformationen für die Website enthält;
von der Funkvorrichtung (1) eine Einloginformationennachricht (G) zu empfangen, die einen Einlog-Token enthält; und
mittels des empfangenen Einlog-Tokens automatisch auf der Website einzuloggen.

## Revendications

1. Procédé mis en oeuvre dans un dispositif radio (1) pour faciliter une ouverture de session sur un site web, le procédé comprenant :
au moyen d'un navigateur web (23) dans le dispositif radio, le téléchargement (S1) d'une page web (B) du site web à partir d'un serveur web (5) qui héberge le site web ;
la réception (S2), sur une application (22) d'un fournisseur de service (4), d'une demande d'ouverture de session (D) provenant du serveur web (5), la demande d'ouverture de session comprenant une demande d'information d'ouverture de session pour le site web ;
en réponse à la demande d'ouverture de session (D) reçue (S2) et au moyen de l'application (22), l'envoi automatique (S4) d'une demande de jeton d'ouverture de session (E) à un serveur du fournisseur de service (4) ;
depuis le serveur du fournisseur de service (4), la réception (S5) sur l'application (22) d'une réponse de jeton d'ouverture de session (F) comprenant un jeton d'ouverture de session ; et
vers le serveur web (5), l'envoi (S6) par l'application (22) d'un message d'information d'ouverture de session (G) comprenant le jeton d'ouverture de session.

2. Procédé selon la revendication 1, dans lequel la demande d'ouverture de session (D) comprend une clé privée, qui correspond à une clé publique de l'application (22), permettant à l'application de vérifier que le serveur web (5) est autorisé à recevoir l'information d'ouverture de session.

3. Procédé selon la revendication 1 ou 2, dans lequel la réception (S2) de la demande d'ouverture de session est déclenchée par l'entrée, par un utilisateur du dispositif radio (1), d'une commande dans la page web téléchargée (S1) via une interface utilisateur (26) du dispositif radio.

4. Procédé selon l'une quelconque des revendications précédentes, comprenant en outre :
en réponse à la demande d'ouverture de session reçue (S2) et avant l'envoi automatique (S4) de la demande de jeton d'ouverture de session, le démarrage (S3) de l'application (22) en exécutant un logiciel d'application (31) stocké dans le dispositif radio.

5. Procédé selon l'une quelconque des revendications précédentes, dans lequel la demande d'ouverture de session (D) comprend un URL de retour qui informe le dispositif radio de la page web où l'information d'ouverture de session doit être utilisée.

6. Procédé selon l'une quelconque des revendications précédentes, dans lequel la demande d'ouverture de session est un message de schéma URL personnalisé.

7. Procédé selon l'une quelconque des revendications précédentes, dans lequel le jeton d'ouverture de session est un jeton OAuth.

8. Produit logiciel (30) comprenant des composants exécutables par un ordinateur (31) pour commander à un dispositif radio (1) de mettre en oeuvre le procédé selon l'une quelconque des revendications 1 - 7 quand les composants exécutables par un ordinateur sont exécutés sur un circuit processeur (21) compris dans le dispositif radio.

9. Dispositif radio (1) comprenant :
un circuit processeur (21) ; et
une unité de stockage (22) qui stocke des instructions (31) exécutables par ledit circuit processeur moyennant lesquelles ledit dispositif radio est fonctionnel pour :
au moyen d'un navigateur web (23) dans le dispositif radio, télécharger une page web (B) du site web à partir d'un serveur web (5) qui héberge le site web ;
recevoir, sur une application (22) d'un fournisseur de service (4), une demande d'ouverture de session (D) provenant du serveur web (5), la demande d'ouverture de session comprenant une demande d'information d'ouverture de session pour le site web ;
en réponse à la demande d'ouverture de session (D) reçue et au moyen de l'application (22), envoyer automatiquement une demande de jeton d'ouverture de session (E) à un fournisseur de service (4) ;
depuis le fournisseur de service (4), recevoir sur l'application (22) une réponse de jeton d'ouverture de session (F) comprenant un jeton d'ouverture de session ; et
vers le serveur web (5), depuis l'application (22), envoyer un message d'information d'ouverture de session (G) comprenant le jeton d'ouverture de session.

10. Procédé mis en oeuvre par un serveur web (5) pour faciliter une ouverture de session sur un site web hébergé sur le serveur web, le procédé comprenant :
le chargement (S11) d'une page web (B) du site web vers un navigateur web (23) d'un dispositif radio (1) ;
l'envoi (S12) d'une demande d'ouverture de session (D) à une application (22) dans le dispositif radio, la demande d'ouverture de session comprenant une demande d'information d'ouverture de session pour le site web ;
depuis le dispositif radio (1), la réception (S14) d'un message d'information d'ouverture de session (G) comprenant un jeton d'ouverture de session ; et
l'ouverture automatique d'une session (S15) sur le site web au moyen du jeton d'ouverture de session reçu (S14).

11. Procédé selon la revendication 10, dans lequel la demande d'ouverture de session (D) comprend une clé privée, qui correspond à une clé publique de l'application (22), permettant à l'application de service de vérifier que le serveur web (5) est autorisé à recevoir l'information d'ouverture de session.

12. Procédé selon la revendication 10 ou 11, dans lequel le message d'information d'ouverture de session (G) comprend un URL de retour d'une page web sur le site web, et dans lequel l'ouverture de session (S15) s'effectue sur la page web de l'URL de retour.

13. Procédé selon la revendication 12, comprenant en outre :
avant la réception (S14) du message d'information d'ouverture de session, le chargement (S13) de la page web de l'URL de retour vers le navigateur web (23).

14. Produit logiciel (30) comprenant des composants exécutables par un ordinateur (33) pour commander à un serveur web (5) de mettre en oeuvre le procédé selon l'une quelconque des revendications 10 - 13 quand les composants exécutables par un ordinateur sont exécutés sur un circuit processeur (26) compris dans le serveur web.

15. Serveur web (5) comprenant :
un circuit processeur (26) ; et
une unité de stockage (27) qui stocke des instructions (33) exécutables par ledit circuit processeur, moyennant quoi ledit serveur web est fonctionnel pour :
charger une page web (B) du site web vers un navigateur web (23) d'un dispositif radio (1) ;
envoyer une demande d'ouverture de session (D) à une application (22) dans le dispositif radio, la demande d'ouverture de session comprenant une demande d'information d'ouverture de session pour le site web ;
depuis le dispositif radio (1), recevoir un message d'information d'ouverture de session (G) comprenant un jeton d'ouverture de session ; et
ouvrir automatiquement une session sur le site web au moyen du jeton d'ouverture de session reçu.
